Europäisches Patentamt

(19) European Patent Office

Office européen des brevets

(11) Publication number: **0 005 532**
**B1**

# (12) EUROPEAN PATENT SPECIFICATION

(45) Date of publication of patent specification: **17.02.82**

(51) Int. Cl.³: **H 04 N 7/18, G 08 G 1/00**

(21) Application number: **79101471.5**

(22) Date of filing: **14.05.79**

(54) Apparatus mounted on a vehicle for recording of accidents.

(30) Priority: **19.05.78 IT 2360578**

(43) Date of publication of application:
**28.11.79 Bulletin 79/24**

(45) Publication of the grant of the European patent:
**17.02.82 Bulletin 82/7**

(84) Designated Contracting States:
**AT BE CH DE FR GB NL SE**

(56) References cited:
**DE - B - 2 144 953**
**FR - A - 2 082 432**

INSTITUTE OF ELECTRICAL AND ELECTRONICS ·
ENGINEERS, I.E.E.E. AUTOMOTIVE
CONFERENCE RECORD, September 1967, New
York (US) STILLMAN et al.: "Development of a
traffic flow sensing and surveillance system",
paper 7, pages 1 to 7.
PROCEEDINGS 1969 CARNAHAN CONFERENCE
ON ELECTRONIC CRIME COUNTER MEASURES,
April 24—26 1969 UNIVERSITY OF KENTUCKY
(US) WINTERS: "Photo surveillance", pages 20
to 23.

(73) Proprietor: **Conte, Raffaele**
**Via Freguglia , 8/A**
**I-20100 Milan (IT)**

(72) Inventor: **Conte, Raffaele**
**Via Freguglia , 8/A**
**I-20100 Milan (IT)**

(74) Representative: **Racheli, Adele**
**Viale San Michele del Carso, 4**
**I-20144 (Milan) (IT)**

Courier Press, Leamington Spa, England.

Apparatus mounted on a vehicle for recording of accidents

This invention is concerned with an apparatus for recording accidents comprising:

— at least a scanning means (for example a television camera) for detecting and converting images into electric signals;

— a storing circuit for the signals comprising a loop memory for each scanning means in which the images are continuously recorded which automatically erases the earliest image by superimposition of the signals relating to the latest image and

— means for stopping the continuous recording of the images.

Each situation or event which is the cause of debate, or has criminal implications, should as far as possible be collated with a photographic type of documentation capable of providing a visual record of the event, suitable to promote the verification or control of its causes and its development, independently of opinion and the not always reliable evidence of witnesses. The character of accidents makes however highly onerous the acquisition of the documentation.

For example, in case of a scrupulous motorist or car-driver willing to support by documentary evidence at any time his own correctness or other's faults, in the case of a road accident, he could mount at suitable position on his own car a motion-picture camera and thereby continuously film the zones around his car of the roads so as to film the instants that might precede any accident. It will be readily understood that such a procedure would have a very high operating and servicing cost for the need of replacing the film being exposed.

In FR—A—2082432 an apparatus for recording accidents is disclosed which is designed to survey a predetermined and fixed area. A loop memory is provided for recording images of a fixed camera which is installed at a crossroad. The images relating to an accident are then taken by the camera and they are stored into a magnetic tape. The image recording may be stopped only by a sensor, located nearby the camera and this sensor requires a manual operation.

The disadvantages of such a device can be summarized as follows:

— the field scanned by the camera is fixed;

— the sensor is located outside the recording area;

— the sensor requires a manual operation and the driver must have presence of mind to operate it.

Thus the device can be useful only in case of accidents in which the driver was not seriously injured. In fact in this latter case it is impossible to operate the sensor, so that the images relating to the accident are erased by superimposition of the successive signals.

The known device supplies the film of an accident occurring in a certain and fixed area, but can not provide the drivers of vehicles with automatic documentation — i.e. without any manual intervention from the driver — of the sequence of events occurred before and during the actual accident.

It is the object of the present invention to provide an inexpensive apparatus for the documentation of accidents.

To this end, provision is made for an apparatus for recording accidents:

A) which is mounted on a vehicle and

B) in which the means for stopping the continuous image recording is a sensor which senses any driving anomaly, sudden deceleration, sudden stop, impact, abnormal deviation and the like indicative of an accident, whereby signals relating to an image of the accident are retained in the storing circuit.

A preferred embodiment provides also for an additional recorder which, when operated, receives the stored images contained in the or each loop memory.

Another embodiment provides also for a monitor which is connected either to said scanning means or to said at least one memory. This monitor displays the images taken by said scanning means or recorded into said loop memory or memories.

In another preferred embodiment the means for stopping the continuous image filming is also operable by a manual control so as to stop the storing of said loop memory or memories.

A preferred embodiment provides also for a plurality of scanning means and storing circuits connected by means of an automatic selector to a single magnetic recorder.

In another embodiment the storing circuit comprises moreover a plurality of loop memories.

The present invention will be more clearly understood from the following detailed description given by way of unrestrictive example with specific reference to the drawings, wherein:

Fig. 1 is a block diagram for a complete apparatus with a single television camera;

Fig. 2 is a block diagram of a device capable of displaying on a monitor the images stored in a tape recorder.

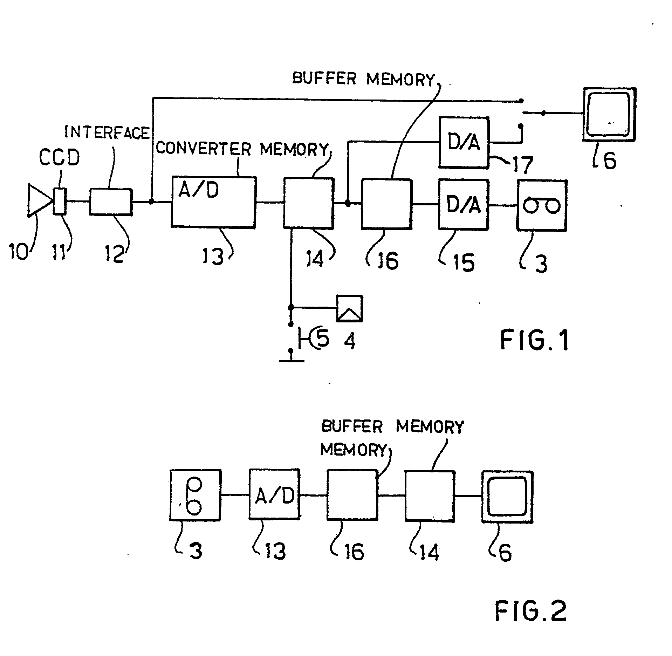

With reference at first to Fig. 1, it will be noted that a lens 10 is provided for focusing the images on the charge coupled device (CCD) indicated at 11. In a practical embodiment of the invention the type CD 202 of the Firm Fairchild of Palo Alto (USA) has been used.

The image focused on the device 11 will be sent to an interface device 12 of the type indicated in the specifications given by the manufacturer of the CCD device used.

The lens 10, the CCD device 11 and the interface device 12 form together a television camera. The choice of this solution is suitable for easy synchronising the rest of the apparatus.

The output of the interface 12 will be sent to an analog-to-digital converter 13 which in this specific embodiment is of the three bit type carried out with discrete components. The digital output is suitable for storage on normal erasable memories. As an example, we will mention that memories of the CCD type have been used, in particular the TMS 3604 of the Texas Instruments Co of Dallas (USA).

These memories are of the loop type, so that when they reach their maximum data capacity, the storage will be continuous, erasing the earliest image contained in the memory and inserting in its place the latest image just arrived.

The loop memory is controlled by a sensor 4 of a known type, which senses every driving anomaly, sudden deceleration, sudden stop, impact, abnormal deviation and the like, of the vehicle on which the apparatus is mounted.

This sensor 4 stops the storage of images in the memory, thus stopping at the same time the erasure of the earliest image already stored. Thus in this memory, the series of images corresponding to the last predetermined period preceding and contemporary to the accidental event will be retained. Obviously the number of images stored varies depending on the quantity of memories used.

Thereafter it would be possible, in the case of an accident, to take this memory with its power supply to a judge, who would view the images stored in it by means of a digital-to-analog converter (D/A) in a normal video monitor. The desired evidence of the event will thus be obtained.

An improvement of the invention consists in connecting to the memory 14 a device for recording the stored images on a storage medium. In particular by means of a buffer memory 16 the transmission rate of the image signals is powered and the signals are supplied by way of a D/A converter 15 to a conventional tape recorder 3.

Another embodiment consists in directly storing the digital signals coming from the buffer memory 16 in a tape recorder by means of one of the known techniques.

Another embodiment foresees that on the vehicle a miniature monitor 6 will be installed. It can receive the real-time images not yet stored directly from the interface 12 and in this way it can check the operation of the television camera. The stored images coming out from the memory 14 can also be sent through a D/A converter 17, to the monitor. Finally, the monitor can be selectively connected to a recorder as shown in Figure 2, by means of switches.

This device consists of the A/D converter 13, the buffer memory 16, the loop memory 14 and the monitor 6 which receives signals through a D/A converter (not represented). This device shows also the necessary apparatus for viewing the tapes outside the vehicle. In case the tape has been digitally recorded the passage through the A/D and D/A converter will be eliminated.

The start of recorder 3 and stop of the storing function of memory 14 is also assured by a pushbutton 5 operable by the user whenever he wishes to record on the tape independently of the events causing the operation of sensor 4. The possible successive viewing on the monitor 6 of the images recorded on recorder 3 may be caused by the user on operation of a pushbutton (not shown).

Finally, it should be considered that the two functions (signal reception and transmission) performed by the memory 14 are inconsistent with each other. Therefore, as above mentioned, when the function of transmitting signals to the recorder 3, caused by sensor 4 or pushbutton 5, is started, such a transmission function shuts off the continuation of the function of receiving signals from the television cameras. This feature prevents the erasure of useful images, that is images relating to the accident through superimposition of successive useless images, no longer relating to the accident, and therefore it is assured that the recording on the tape relates only to the moments immediately preceding and contemporary to said accident. According to one of the many possible arrangements and combinations, a plurality of visual scanning means and storing circuits can be provided, connected by means of an automatic selector to a single magnetic recorder.

## Claims

1. An apparatus for recording accidents comprising:
   a) at least one scanning means (10, 11, 12) (for example a television camera) for detecting and converting images into electric signals;
   b) a storing circuit for the signals comprising at least one loop memory (14), for each scanning means in which the images are continuously recorded, automatically erasing the earliest image by superimposition of the signals relating to the latest image; and
   c) means for stopping the continuous recording of the images; characterized in that
   — the entire apparatus is mounted on a vehicle;
   — and the means for stopping the continuous image recording is a sensor (4) which senses any driving anomaly, sudden deceleration, sudden stop, impact, abnormal deviation and the like, indicative of an accident, whereby signals relating to an image of the accident are retained in the storing circuit.

2. An apparatus as in claim 1, characterized in that provision is made also for a recorder (3) which, when operated, receives the store images contained in the or each loop memory.

3. An apparatus according to Claim 1 or 2, characterized in that provision is also made for a monitor (6), connected either to said scanning means (10, 11, 12) or to said at least one loop memory (14), which displays the images taken by said scanning means (10, 11, 12) or recorded into said loop memory (14) or memories.

4. An apparatus according to Claim 2 or 3, characterized in that the means for stopping the continuous image filming is also operable by a manual control (5) so as to stop the storing of said loop memory (14) or memories.

5. An apparatus according to claim 1, characterized in that provision is made for a plurality of scanning means (10, 11, 12) and storing circuits (14) connected by means of an automatic selector to a simple magnetic recorder (3).

6. An apparatus according to claim 1, characterized in that the storing circuit comprises a plurality of loop memories (14).

## Revendications

1. Appareil pur l'enregistrement d'accidents, comportant:

a) au moins un moyen de balayage d'images (10, 11, 12) (par example une caméra de télévision) pour relever et convertir les images en signaux électriques;

b) un circuit de memorisation de signaux, qui comporte une mémoire à boucle (14) pour chaque moyen de balayage, où les images sont continuellement mémorisées, par effacement automatique de l'image plus ancienne et par son remplacement par les signaux qui se rapportent à l'image plus récente, et

c) un moyen pour interrompre l'entristrement de la succession d'images;

— l'appareil entier est monté sur un véhicule,

— et le moyen pour interrompre l'enregistrement de la succession d'images est constitué par un capteur (4) qui relève chaque anomalie de direction, tel que la décéleration brusque, l'arrêt soudain, l'impact, la déviation anormale et similaires qui indiquent un accident, et où les signaux qui représentent les images de l'accident sont insérés dans un circuit de mémoire.

2. Appareil selon la revendication 1, caractérisé en ce qu'on a prévu aussi un enregistreur (3) qui, lorsqu'il est actionné recoit les images mémoirsées contenues dans la mémoire à boucle ou chaque mémoire à boucle.

3. Appareil selon la revendication 1 ou 2, caractérisé en ce qu'on a prévu un moniteur (6) relié soit aux moyens de balayage d'images precites (10, 11, 12) soit, au moins, à unes desdites mémoires à boucle (14) qui visualisent les images relevées par lesdits moyens de balayage d'images (10, 11, 12) ou mémorisées dans ladite mémoire (14) ou mémoire à boucle.

4. Appareil selon la revendication 2 ou 3, caractérisé en ce que le moyen pour interrompre la succession des images peut aussi être actionne par un contrôle manuel (5) de manière à arrêter la mémorisation dans ladite mémoire (14) ou mémoires à boucle.

5. Appareil selon la revendication 1, caractérisé en ce qu'il comporte une pluralité de moyens de balayage (10, 11, 12) et de circuits de mémoire (14) reliées au moyen d'un sélecteur automatique à un enregistreur magnétique unique (3).

6. Appareil selon la revendication 1, caractérisé en ce que le circuit de mémorisation comporte une pluralité de mémoires á boucle (14).

## Patentansprüche

1. Vorrichtung zur Aufnahme von Unfällen bestehend aus:

(a wenigstens einem Mittel zum Abtasten der Bilder (10, 11, 12), (beispielsweise eine Fernsehkamera) zum Aufnehmen und Umwandeln dieser Bilder in elektrische Signale,

b) einer Schaltung zum Speichern der Signale die einen Ringspeicher (14) für jedes Abtastmittel umfasst, in dem die Bilder kontinuierlich gespeichert werden, wobei das ältere Bild automatisch ausgelöscht und an seiner Stelle die Signale, die sich auf das neuere Bild beziehen, eingesetzt werden,

c) einem Mittel zum Unterbrechen der Aufnahme des Bildflusses dadurch gekennzeichnet, dass

die gesamte Vorrichtung auf einem Farhzeug montiert ist und dass das Mittel zum Unterbrechen des Bildflusses aus einem Fühler (Sensor) (4) besteht, der jede Verkehrsunregelmassigkeit, wie plötzliche Beschleunigungsverminderung, plötzlichen Stillstand, Anprall, regelwidrigen Richtungswechsel und dgl., die Anzeichen für einen Unfall sein kann, wahrnimmt und in dem die Signale, die die Bilder des Unfalles darstellen, in einer Speicherschaltung aufgenommen sind.

2. Vorrichtung nach Anspruch 1, dadurch gekennzeichnet, dass ein Aufnahmegerët (3) vorgesehen ist, das im eingeschalteten Zustand die in einem oder jedem Ringspeicher enthaltenen gespeicherten Bilder aufnimmt.

3. Vorrichtung nach Anspruch 1 oder 2, dadurch gekennzeichnet, dass ein Monitor (6) vorgesehen ist, der sowohl mit den Bildabtastmitteln (10, 11, 12) als auch mit wenigstens einem der Ringspeicher (14) verbunden ist, der die auf den Bildabtastmitteln (10, 11, 12) aufgenommenen oder im Spiecher oder im Schleifenspeicher (14) gespeicherten Bilder sichtbar macht.

4. Vorrichtung nach Anspruch 2 oder 3, dadurch gekennzeichnet, dass das Mittel zum Unterbrechen des Bildflusses auch mit einer Kontrolle (5) vonhand betätigt wird, sodass die Speicherung im Speicher oder, Ringspeicher (14) zum Stillstand kommt.

5. Vorrichtung nach Anspruch 1, dadurch gekennzeichnet, das sie eine Mehrzahl von Abtastmitteln (10, 11, 12) und Speicherschaltungen (14) umfasst, die durch einen automtischen Wählschalter mit einem einzelnen magnetischen Aufnahmegerät (3) verbunden sind.

6. Vorrichtung nach Anspruch 1, dadurch gekennzeichnet, dass die Speicherschaltung eine Mehrzahl von Ringspeichern (14) umfasst.

BUFFER MEMORY

INTERFACE

CONVERTER MEMORY

CCD

A/D

D/A

17

6

10 11 12 13 14 16 15 3

5 4

FIG.1

BUFFER MEMORY

MEMORY

A/D

3 13 16 14 6

FIG.2